# EUROPEAN PATENT SPECIFICATION

(11) **EP 2 924 784 B1**
(45) Date of publication and mention of the grant of the patent: **09.01.2019**
(21) Application number: 13857492.6
(22) Date of filing: 20.11.2013
(51) Int. Cl.: H01M 4/1395, H01M 4/134, H01M 4/36, H01M 4/587, H01M 4/13, H01M 4/139, H01M 4/62, H01M 10/0525

(54) **METHOD FOR PRODUCING NEGATIVE ELECTRODE MATERIAL FOR LITHIUM ION BATTERIES**
VERFAHREN ZUR HERSTELLUNG VON NEGATIVEM ELEKTRODENMATERIAL FÜR LITHIUM-IONEN-BATTERIEN
PROCÉDÉ DE PRODUCTION DE MATÉRIAU D'ÉLECTRODE NÉGATIVE POUR LES BATTERIES AU LITHIUM-ION

(30) Priority: 20.11.2012 JP 2012254729
(43) Date of publication of application: 30.09.2015
(73) Proprietor: Showa Denko K.K., Tokyo 105-8518 (JP)
(72) Inventor: MURATA, Hirokazu, Tokyo 105-8518 (JP); TAKEUCHI, Masataka, Tokyo 105-8518 (JP); ISHII, Nobuaki, Tokyo 105-8518 (JP)
(74) Representative: Strehl Schübel-Hopf & Partner
(86) International application number: PCT/JP2013/006827
(87) International publication number: WO 2014/080629

(56) References cited:
- WO-A1-2013/145925
- WO-A1-2014/178093
- JP-A- 2002 255 529
- JP-A- 2002 255 530
- JP-A- 2002 260 658
- JP-A- 2004 185 975
- JP-A- 2007 519 182
- JP-A- 2011 249 339
- US-A1- 2002 164 479
- US-A1- 2004 106 040
- US-A1- 2013 295 446

## Description

### TECHNICAL FIELD

The present invention relates to a method for producing a negative electrode material for use in a lithium-ion battery. More specifically, the present invention relates to a method for producing a negative electrode material with which it is possible to produce a lithium-ion battery having a large charge-discharge capacity and excellent charge-discharge cycle characteristics.

### BACKGROUND ART

As the trend of portable electronics toward multifunctionality has been outpacing the trend toward reduction in power requirements for electronic components, power consumption of portable electronics has been on the rise. Because of this, lithium-ion batteries, which are the primary power sources in portable electronics, are in demand more strongly than ever to have larger capacities and be smaller in size. In addition, with the growing demand for electric vehicles, lithium-ion batteries for use in such vehicles are strongly demanded to have larger capacities.

In a conventional lithium-ion battery, graphite is primarily used as a negative electrode material. Stoichiometrically speaking, graphite is capable of occluding Li at a ratio no more than the ratio specified by the composition of LiC₆, and therefore the theoretically possible capacity of a lithium-ion battery comprising graphite as a negative electrode is 372 mAh/g.

For the purpose of enhancing the capacity of a lithium-ion battery, research has been conducted on use of a particle comprising a metallic element with a large theoretically possible capacity, such as Si, Sn or the like, as a negative electrode material. For example, a lithium-ion battery comprising an Si-containing particle as a negative electrode material has theoretically possible capacity of 4200 mAh/g. Considering the theoretically possible capacity of a lithium battery comprising metal lithium is 3900 mAh/g, use of Si and the like as a negative electrode material, if possible, is expected to give a lithium-ion battery that is smaller in size and has larger capacity than a lithium battery. A negative electrode material such as Si, however, expands and contracts to a great extent upon intercalation and deintercalation (occlusion and release) of lithium ions. This creates gaps between the particles, making the capacity smaller than expected. In addition, the particles break into fine powders after repeatedly undergoing such great expansion and contraction, and this induces disruption of electrical contacts to cause an increase in internal resistance, which shortens the charge-discharge cycle life of the resulting lithium-ion battery.

So far, a negative electrode material comprising a particle comprising Si and/or Sn and fibrous carbon (Patent Document 1); a negative electrode material comprising a graphite particle and a carbonaceous material attached to the surface of the graphite particle, the carbonaceous material containing a Si-containing particle and fibrous carbon (Patent Document 2) ; a negative electrode material composed of a mixture of a metallic particle such as Si, Sn, and Ge and a graphite particle having d₀₀₂ of not lower than 0.3354 nm and not higher than 0.338 nm and an area ratio of G peak to D peak analyzed by Raman spectroscopy of G/D ≥ 9 (Patent Document 3); a negative electrode material made from a solid solution comprising an element capable of occluding and releasing a lithium ion, such as Si, Ge or the like, and an element incapable of occluding and releasing a lithium ion, such as Cu or the like (Patent Document 4) ; a negative electrode material comprising a graphite particle, an Si particle attached to the surface of the graphite particle and a carbon coating on at least part of the graphite particle (Patent Document 5) ; an electrode structure comprising a composite of a metal powder, a supporting powder and a connecting material serving to provide a chemical bond between the metal powder and a supporting powder (Patent Document 6) have been proposed, for example.

### CITATION LIST

### PATENT LITERATURES

Patent Document 1 : JP 2004-178922 A
Patent Document 2 : JP 2004-182512 A
Patent Document 3 : JP 2004-362789 A
Patent Document 4 : JP 2002-075350 A
Patent Document 5 : JP 2002-008652 A
Patent Document 6 : JP 2007-165061 A
US 2004/0106040 A1 discloses a non-aqueous electrolyte secondary battery negative electrode material containing a lithium ion-occluding and releasing material which has been treated with an organo-silicon base surface treating agent and coated with a conductive coating.

### SUMMARY OF THE INVENTION

### PROBLEMS TO BE RESOLVED BY THE INVENTION

An object of the present invention is to provide a negative electrode material with which it is possible to produce a lithium-ion battery having a large charge-discharge capacity and excellent charge-discharge cycle characteristics.

### MEANS FOR SOLVING THE PROBLEMS

The inventors of the present invention have conducted intensive research to achieve the object and, as a result, have completed an invention including the following embodiments.
[1] A method for producing a negative electrode material for use in a lithium-ion battery, the method comprising:
   subjecting a carbon particle (B) to surface treatment with an oxidizing agent and then removing a residue of the oxidizing agent,
   modifying the carbon particle (B) from which the residue of the oxidizing agent has been removed with a silane coupling agent, and
   linking the modified carbon particle (B) and a particle (A) comprising an element capable of occluding and releasing a lithium ion via a chemical bond, wherein the removal of the residue of the oxidizing agent comprises washing with an acid or a base.
[2] The method for producing a negative electrode material for use in a lithium-ion battery according to [1], the method further comprising:
   modifying the particle (A) with a silane coupling agent, wherein the particle (A) used in the linking is the modified particle (A).
[3] The method for producing a negative electrode material for use in a lithium-ion battery according to [1] or [2], wherein the removal of the residue of the oxidizing agent comprises washing with an inorganic acid.
[4] The method for producing a negative electrode material for use in a lithium-ion battery according to any one of [1] to [3], further comprising coating a composite particle with carbon, wherein the composite particle comprises the particle (A) and the carbon particle (B) linked to the particle (A) via a chemical bond.
[5] The method for producing a negative electrode material for use in a lithium-ion battery according to [4], wherein the coating with carbon comprises attaching an organic substance to the composite particle, wherein the composite particle comprises the particle (A) and the carbon particle (B) linked to the particle (A) via a chemical bond, and then carbonizing the organic substance.
[6] The method for producing a negative electrode material for use in a lithium-ion battery according to [5], wherein the organic substance is a saccharide.
[7] The method for producing a negative electrode material for use in a lithium-ion battery according to any one of [1] to [6], wherein the carbon particle (B) comprises:
   a graphite particle resulting from heat treatment of petroleum coke and/or coal coke at a temperature of 2000 °C or higher, and
   a carbonaceous layer having a ratio of an intensity (I_{D}) of a peak in a range from 1300 to 1400 cm⁻¹ to an intensity (I_{G}) of a peak in a range from 1580 to 1620 cm⁻¹ as measured by Raman spectroscopy, I_{D}/I_{G} (R value), of 0.1 or higher, wherein the carbonaceous layer is on the surface of the graphite particle.
[8] A negative electrode material for use in a lithium-ion battery, the negative electrode material comprising:
   a composite particle comprising a particle (A) comprising an element capable of occluding and releasing a lithium ion and a carbon particle (B) linked to the particle (A) via a chemical bond, and
   a carbon layer that covers the composite particle, and that is obtainable by attaching an organic substance to the composite particle and then carbonizing the organic substance, wherein the carbon particle (B) is obtained by surface treatment with an oxidizing agent and then washing with an acid or a base.
[9] A negative electrode material for use in a lithium-ion battery, obtained by the method according to any one of [1] to [7].
[10] A negative electrode sheet comprising:
   a current collector, and
   a layer that covers the current collector and comprises the negative electrode material for use in a lithium-ion battery according to [8] or [9], a binder, and a conductive assistant.
[11] A lithium-ion battery comprising the negative electrode sheet according to [10].
[12] A lithium-ion battery comprising the negative electrode material according to [8] or [9].
[13] A lithium-ion battery comprising a negative electrode material obtained by the method according to any one of [1] to [7].

### ADVANTAGEOUS EFFECTS OF THE INVENTION

By using a negative electrode material obtained by the method according to the present invention, a lithium-ion battery having a large charge-discharge capacity and excellent charge-discharge cycle characteristics can be produced.

### BRIEF DESCRIPTION OF THE DRAWINGS

Fig. 1 is an illustration showing a conceptual structure of a negative electrode material obtained by the method according to an embodiment of the present invention.
Fig. 2 is an illustration showing a conceptual structure of a negative electrode material obtained by the method according to an embodiment of the present invention.
Fig. 3 is a graph chart showing the cycle characteristics of a negative electrode material obtained by the method in Example 1 and Comparative Example 1.
Fig. 4 is a graph chart showing the cycle characteristics of a negative electrode material obtained by the method in Examples 4 to 6.

### EMBODIMENT FOR CARRYING OUT THE INVENTION

The method for producing a negative electrode material for use in a lithium-ion battery is defined in the claims.

### (Particle (A) comprising an element capable of occluding and releasing lithium ion)

The particle (A) used in the method for producing a negative electrode material according to an embodiment of the present invention comprises a substance comprising an element capable of occluding and releasing a lithium ion. As a matter of course, the particle (A) refers to one other than a carbon particle (B) explained below. The element comprised in the particle (A) is not particularly limited provided that it is capable of occluding and releasing a lithium ion. Examples of preferable element include Si, Sn, Ge, Al, and In. The particle (A) may be an elementary substance of one of these elements, or may be a compound, a mixture, a eutectic mixture, or a solid solution comprising at least one of these elements. The particle (A) may be an agglomerate of a plurality of particulates. Examples of the form of the particle (A) include a lump form, a scale form, a spherical form, a fibrous form or the like. Among these, a spherical form or a lump form is preferable. The particles (A) may form a secondary particle.

Examples of the substance comprising element Si include a substance represented by the formula M^{a}ₘSi. The substance is a compound, a mixture, a eutectic mixture, or a solid solution comprising element M^{a} at a ratio of m mol relative to 1 mol of Si.

The M^{a} is an element other than Li. Specific examples of the M^{a} include Si, B, C, N, O, S, P, Na, Mg, Al, K, Ca, Ti, V, Cr, Mn, Fe, Co, Ni, Cu, Zn, Mo, Ru, Rh, Pd, Pt, Be, Nb, Nd, Ce, W, Ta, Ag, Au, Cd, Ga, In, Sb, Ba or the like. When the M^{a} is Si, the substance refers to the elementary substance Si. In the formula, m is preferably 0.01 or larger, more preferably 0.1 or larger, and further preferably 0.3 or larger.

Specific examples of the substance comprising element Si include elementary substance Si; alloys of Si and an alkaline-earth metal; alloys of Si and a transition metal; alloys of Si and a metalloid; solid soluble alloys or eutectic alloys of Si and Be, Ag, Al, Au, Cd, Ga, In, Sb, or Zn; silicides such as CaSi, CaSi₂, Mg₂Si, BaSi₂, Cu₅Si, FeSi, FeSi₂, CoSi₂, Ni₂Si, NiSi₂, MnSi, MnSi₂, MoSi₂, CrSi₂, Cr₃Si, TiSi₂, Ti₅Si₃, NbSi₂, NdSi₂, CeSi₂, WSi₂, W₅Si₃, TaSi₂, Ta₅Si₃, PtSi, V₃Si, VSi₂, PdSi, RuSi, RhSi or the like; and SiO₂, SiC, Si₃N₄ or the like.

Examples of the substance comprising element Sn include elementary substance tin, tin alloys, tin oxides, tin sulfides, tin halides, stannides or the like. Specific examples of the substance comprising element Sn include alloys of Sn and Zn, alloys of Sn and Cd, alloys of Sn and In, alloys of Sn and Pb; tin oxides such as SnO, SnO₂, M^{b}₄SnO₄ (M^{b} is a metallic element other than Sn) or the like; tin sulfides such as SnS, SnS₂, M^{b}₂SnS₃ or the like; tin halides such as SnX₂, SnX₄, M^{b}SnX₄ (M^{b} is a metallic element other than Sn and X is a halogen atom) or the like; stannides such as MgSn, Mg₂Sn, FeSn, FeSn₂, MoSn, MoSn₂ or the like.

The particle (A) is preferably oxidized on its surface layer. This oxidation may be either natural oxidation or artificial oxidation. By this oxidation, a thin oxide coating is formed over the particle (A).

The particle (A) as a raw material has the number average primary particle diameter of preferably 10 nm to 1 µm and more preferably 30 nm to 500 nm. The particles (A) in a state of a raw material usually form agglomerates (secondary particles) and may have a peak in each of the range from 0.1 µm to 1 µm and the range from 10 µm to 100 µm in the particle size distribution of the agglomerate (secondary particle). The 50% particle diameter (D50) of the particle (A) as a raw material is preferably 1/200 to 1/10 and more preferably 1/100 to 1/20 of the 50% particle diameter of the carbon particle (B) as a raw material.

In the present invention, the particle (A) is released from its agglomerate when linked to the carbon particle (B), leading to an increase in the number of them as a primary particle. Because of this, the number average particle diameter of the particle (A) is preferably 0.001 to 10 µm, more preferably 0.01 to 5 µm, and further preferably 0.05 to 1 µm. In prior art, a particle (A) attached to a carbon particle (B) readily agglomerates and, because the resulting secondary particle (agglomerate) has a large diameter, often has a number average particle diameter greater than 10 µm. The distribution of the particle (A) linked to the carbon particle (B) can be measured from the micrograph obtained by SEM observation.

### (Carbon particle (B))

The carbon particle (B) used in the method for producing a negative electrode material according to an embodiment of the present invention is a particle comprising a carbon material. As the carbon material, a graphite material such as artificial graphite, pyrolytic graphite, expanded graphite, natural graphite, squamate graphite, scale-like graphite or the like; or a carbonaceous material with its crystal underdeveloped, such as graphitizable carbon, non-graphitizable carbon, glassy carbon, amorphous carbon, low temperature calcined carbon or the like is used. The carbon particle (B) is, among them, preferably one comprising a graphite material, one comprising a graphite particle and a carbonaceous layer, one comprising a carbon-coated graphite particle to which a carbon fiber is bound, or one comprising a carbonaceous material with its crystal underdeveloped.

The carbon particle (B) is preferably 2 to 40 µm, more preferably 2 to 30 µm, and further preferably 3 to 20 µm in the 50% particle diameter (D₅₀) based on the volumetric cumulative particle size distribution.

As for the carbon particle (B), when fine particles are high in number, it is difficult to raise the electrode density, while when large particles are high in number, application of the negative electrode layer can be non-uniform to potentially impair battery properties. Therefore, the carbon particle (B) preferably has such a particle size distribution that 90% or more of the particles in number have a particle diameter within the range of 1 to 50 µm and more preferably has such a particle size distribution that 90% or more of the particles in number have a particle diameter within the range of 5 to 50 µm. The 10% particle diameter (D₁₀) of the carbon particle (B) based on the volumetric cumulative particle size distribution is preferably 1 µm or greater and more preferably 2 µm or greater. The particle size distribution of the carbon particle (B) is measured by a laser diffraction particle size distribution analyzer. The measured particle size distribution includes the particle diameters of secondary particles as well. The particle diameter of each of the carbon particle (B) comprising a graphite material, the carbon particle (B) comprising a graphite particle and a carbonaceous layer, the carbon particle (B) comprising a carbon-coated graphite particle to which a carbon fiber is bound, and the carbon particle (B) comprising a carbonaceous material with its crystal underdeveloped, all of which are to be explained below, is preferably within the range of the particle diameter described above.

[Carbon particle (B) comprising graphite material] The carbon particle (B) as an embodiment is a graphite particle and is preferably an artificial graphite particle. The d₀₀₂ of the graphite particle is preferably 0.337 nm or less and is more preferably 0.336 nm or less. The L_{C} of the graphite particle is preferably 50 nm or more and is more preferably 50 nm to 100 nm. The d₀₀₂ refers to the value of the interplanar spacing determined from a 002 diffraction line measured by powder X-ray diffraction, and the L_{C} refers to the size of crystallite in the c axis direction determined from a 002 diffraction line measured by powder X-ray diffraction.

A preferable graphite particle has a BET specific surface area of preferably 1 to 10 m²/g and more preferably 1 to 7 m²/g. The artificial graphite particle can be obtained by using coal coke and/or petroleum coke as a raw material.

The artificial graphite particle is preferably obtained by heat treatment of coal coke and/or petroleum coke at a temperature of preferably 2000 °C or higher and more preferably 2500 °C or higher. The upper limit to the temperature during the heat treatment is not particularly limited and is preferably 3200 °C. This heat treatment is preferably performed in an inert atmosphere. In the heat treatment, a conventional Acheson graphitization furnace, for example, can be used.

### [Carbon particle (B) comprising graphite particle and carbonaceous layer]

The carbon particle (B) as an embodiment comprises a graphite particle and a carbonaceous layer on the surface of the graphite particle (hereinafter, sometimes called a carbon-coated graphite particle).

The graphite particle is obtained by heat treatment of petroleum coke and/or coal coke at a temperature of preferably 2000 °C or more and more preferably 2500 °C or more. The graphite particle further preferably has properties of the above-mentioned carbon particle (B) comprising a graphite material.

The carbonaceous layer on the surface has a ratio of the intensity (I_{D}) of the peak in the range from 1300 to 1400 cm⁻¹ attributable to amorphous components to the intensity (I_{G}) of the peak in the range from 1580 to 1620 cm⁻¹ attributable to graphite components as measured by Raman spectroscopy, I_{D}/I_{G} (R value), of preferably 0.1 or higher, more preferably 0.2 or higher, further preferably 0.4 or higher, and particularly preferably 0.6 or higher. When a carbonaceous layer has a high R value, in other words, when a layer of an amorphous carbon material is placed on the surface of the graphite particle, intercalation and deintercalation of lithium ions are facilitated and the resulting lithium-ion battery is improved in its rapid charge-discharge characteristics.

The carbon-coated graphite particle can be produced by a known method. For example, firstly a graphite powder is pulverized to give a fine graphite particle having a predetermined size. Then, the graphite particle is stirred while an organic compound is sprayed thereto. Alternatively, an instrument such as a hybridizer manufactured by Nara Machinery Co., Ltd. is used to mix the graphite particle and an organic compound such as pitch, phenolic resins or the like so as to allow the mechanochemical treatment to proceed.

The organic compound is not particularly limited and is preferably isotropic pitch, anisotropic pitch, or a resin or a resin precursor or a monomer. When a resin precursor or a monomer is used, the resin precursor or the monomer is preferably polymerized into a resin. Preferable examples of the organic compound include at least one selected from the group consisting of petroleum pitch, coal pitch, phenolic resins, polyvinyl alcohol resins, furan resins, cellulose resins, polystyrene resins, polyimide resins, and epoxy resins. The amount of the organic compound to be attached can be selected so as to control the amount of the carbonaceous layer on the surface of the graphite particle. The amount of the organic compound to be attached is preferably 0.05 to 10 parts by mass and more preferably 0.1 to 10 parts by mass relative to 100 parts by mass of the graphite particle. When the amount of the carbonaceous layer is too great, the capacity potentially decreases.

Then, the graphite particle to which an organic compound is attached is subjected to heat treatment at preferably not lower than 200 °C and not higher than 2000 °C, more preferably not lower than 500 °C and not higher than 1500 °C, and further preferably not lower than 900 °C and not higher than 1200 °C. By this heat treatment, a carbon-coated graphite particle is obtained. When the temperature during the heat treatment is too low, carbonization of the organic compound does not thoroughly complete and the resulting carbon particle (B) has residual hydrogen and/or residual oxygen that can adversely affect the battery properties. On the other hand, when the temperature during the heat treatment is too high, crystallization proceeds excessively to potentially compromise the charge characteristics. The heat treatment is preferably performed in a non-oxidizing atmosphere. Examples of the non-oxidizing atmosphere include an atmosphere filled with an inert gas such as argon gas, nitrogen gas or the like, or a vacuum state. The heat treatment sometimes causes the carbon-coated graphite particles to fuse with each other into a lump, and therefore it is preferable to conduct pulverization to achieve the particle diameter described above so that the resulting carbon-coated graphite particle can be used as an electrode active material. The BET specific surface area of the carbon-coated graphite particle is preferably 0.5 to 30 m²/g, more preferably 0.5 to 10 m²/g, and further preferably 0.5 to 5 m²/g.

### [Carbon particle (B) comprising a graphite particle to which carbon fiber is bound]

The carbon particle (B) as an embodiment is one comprising the graphite particle or the carbon-coated graphite particle and a carbon fiber bound to the surface of the graphite particle or the carbon-coated graphite particle. The carbon fiber is preferably a vapor grown carbon fiber.

The average fiber diameter of the carbon fiber used is preferably 10 to 500 nm, more preferably 50 to 300 nm, further preferably 70 to 200 nm, and particularly preferably 100 to 180 nm. When the average fiber diameter is too small, the handleability tends to be degraded.

The aspect ratio of the carbon fiber is not particularly limited and is preferably 5 to 1000, more preferably 5 to 500, further preferably 5 to 300, and particularly preferably 5 to 200. With the aspect ratio being 5 or higher, functions as a fibrous conductive material are exerted, and with the aspect ratio being 1000 or lower, excellent handleability is achieved.

The vapor grown carbon fiber can be produced, for example, by introducing a raw material that is a carbon source, such as benzene or the like, together with a catalyst comprising an organic transition metal compound, such as ferrocene or the like, into a reaction furnace at a high temperature using a carrier gas to allow vapor-phase pyrolysis to proceed. Examples of the method for producing the vapor grown carbon fiber include a method of producing a pyrolytic carbon fiber on a base plate (JP S60-27700 A), a method of producing a pyrolytic carbon fiber at a floating state (JP S60-54998 A), and a method of allowing a pyrolytic carbon fiber to grow on the wall of a reaction furnace (JP 2778434 B) or the like, and these methods can produce the vapor grown carbon fiber for use in the present invention.

Although the vapor grown carbon fiber thus produced can be used as it is as a raw material for the carbon particle (B), the vapor grown carbon fiber as it is obtained by vapor deposition can comprise, for example, a pyrolytic product of a feed carbon source attached to the surface thereof, or the crystal structure of the carbon fiber can be underdeveloped. To remove impurities such as the pyrolytic product and/or allow the crystal structure to develop, heat treatment in an inert gas atmosphere can be employed. For treating impurities such as the pyrolytic product, the heat treatment is preferably performed in an inert gas such as argon at about 800 to 1500 °C. For allowing the crystal structure to develop, the heat treatment is preferably performed in an inert gas such as argon at about 2000 to 3000 °C. During the heat treatment, the vapor grown carbon fiber can be mixed with a boron compound such as boron carbide (B₄C), boron oxide (B₂O₃), elementary boron, boric acid (H₃BO₃), borates or the like as a graphitization catalyst. The amount of boron compound added depends on the chemical properties or the physical properties of the boron compound and therefore cannot be generally specified. When boron carbide (B₄C) is used, for example, the amount thereof is preferably within the range of 0.05 to 10% by mass and more preferably within the range of 0.1 to 5% by mass relative to the amount of the vapor grown carbon fiber. As the vapor grown carbon fiber thus treated, a commercially available product such as "VGCF" (registered trademark; manufactured by Showa Denko K.K.) can be used, for example.

The method for binding (bonding) the carbon fiber to the surface of the graphite particle or the carbon-coated graphite particle is not particularly limited. For example, by mixing the carbon fiber with an organic compound, then allowing the mixture to attach to the graphite particle or the carbon-coated graphite particle, and subsequently subjecting the resultant to heat treatment, the carbon fiber can be bound to the carbonaceous layer during the process of the carbonaceous layer being formed. The amount of the carbon fiber is preferably 0.1 to 20 parts by mass and more preferably 0.1 to 15 parts by mass relative to 100 parts by mass of the graphite particle. When the amount is 0.1 part by mass or greater, the surface of the graphite particle can be largely covered. The presence of the electric conductive carbonaceous layer between the graphite particle and the carbon fiber reduces the contact resistance. Using the carbon particle (B) comprising a graphite particle to which a carbon fiber is bound, compared to the case of simple addition of a carbon fiber into an electrode, results in a large improvement of battery properties.

### (Carbon particle (B) comprising carbonaceous material with its crystal underdeveloped)

The carbon particle (B) as an embodiment comprises a carbonaceous material with its crystal underdeveloped.

The carbonaceous material with its crystal underdeveloped here refers to graphitizable carbon, non-graphitizable carbon, glassy carbon, amorphous carbon, low temperature calcined carbon, or the like. The carbonaceous material with its crystal underdeveloped can be prepared by a known method.

As a raw material to prepare the carbonaceous material with its crystal underdeveloped, a petroleum-derived substance such as thermal heavy oil, pyrolytic oil, straight asphalt, blown asphalt, raw coke, needle coke, calcined coke, and tar and pitch as by-products from ethylene production; a coal-derived substance such as coal tar produced in coal carbonization, a heavy component obtained by distilling low-boiling-point components off coal tar, coal tar pitch, raw coke, needle coke, or calcined coke; a substance derived from resin such as phenolic resins, polyvinyl alcohol resins, furan resins, cellulose resins, polystyrene resins, polyimide resins, and epoxy resins; or a substance derived from plant such as a coconut shell, a rice husk, a coffee husk, bamboo charcoal, broad leaf trees, and needle leaf trees can be used.

The method for producing the carbonaceous material with its crystal underdeveloped is not limited to only one method. Examples of preferable methods include a method that comprises subjecting the raw material described above to carbonization treatment in an inert atmosphere at preferably not lower than 800 °C and lower than 2000 °C and more preferably not lower than 1000 °C and not higher than 1500 °C.

The d₀₀₂ of the carbonaceous material with its crystal underdeveloped is preferably 0.400 nm or smaller, more preferably 0.385 nm or smaller, and further preferably 0.370 nm or smaller. The lower limit of the d₀₀₂ is preferably 0.340 nm. The L_{C} of the carbonaceous material with its crystal underdeveloped is preferably 50 nm or smaller.

The BET specific surface area of the carbonaceous material with its crystal underdeveloped is preferably 1 to 10 m²/g and more preferably 1 to 7 m²/g.

### [Linking of particle (A) and carbon particle (B)]

At the linkage point between the particle (A) and the carbon particle (B), a chemical bond is present. The chemical bond is preferably at least one selected from the group consisting of a urethane bond, a urea bond, a siloxane bond, and an ester bond.

The urethane bond is the bond represented by (-NH-(C=O)-O-). The urethane bond is formed, for example, by condensation of an isocyanate group and a hydroxy group.

The urea bond is the bond represented by (-NH-(C=O)-NH-) . The urea bond is formed, for example, by condensation of an isocyanate group and an amino group.

The siloxane bond is the bond represented by (-Si-O-Si-). The siloxane bond is formed, for example, by dehydration condensation of silanol groups.

The ester bond is the bond represented by (-(C=O)-O-). The ester bond is formed, for example, by a reaction between a carboxy group and a hydroxy group.

The chemical bond that links the particle (A) and the carbon particle (B) can be formed by introducing, into the carbon particle (B) by using a silane coupling agent, a functional group that can serve as a base of a chemical bond, then optionally introducing a functional group that can serve as a base of a chemical bond into the particle (A) by using a silane coupling agent, and subsequently subjecting both functional groups to a reaction.

Examples of combinations of functional groups to be introduced to the particle (A) and to the carbon particle (B) include a combination of an isocyanate group and a hydroxy group, a combination of an isocyanate group and an amino group, a combination of a carboxy group and a hydroxy group, and a combination of a silanol group and a silanol group. One of the functional groups in each of the combinations can be introduced into the particle (A) with the other introduced into the carbon particle (B), or vice versa.

When the carbon particle (B) itself already comprises sufficient number of functional groups that can serve as the base of a chemical bond, the carbon particle (B) can be used as it is, while when the carbon particle (B) itself does not contain sufficient number of the functional groups, introduction of such a functional group into the carbon particle (B) is preferably performed.

In the method according to the present invention, for the purpose of functional group introduction with the use of a silane coupling agent, the carbon particle (B) is first subjected to surface treatment with an oxidizing agent. This surface treatment achieves introduction of mainly a hydroxy group onto the surface of the carbon particle (B).

The oxidizing agent for use in the method according to the present invention is not particularly limited and is preferably a metallic oxidizing agent. Examples of the metallic oxidizing agent include bis(tetrabutylammonium) dichromate, bis(4-methoxyphenyl) selenoxide, benzeneseleninic acid, chloronitrosyl[N,N'-bis(3,5-di-tert-butylsalicylidene)-1,1,2,2-tetramethylethylenediamin ato] ruthenium (IV), lead tetraacetate, osmium (VIII) oxide, pyridinium chlorochromate, pyridinium dichromate, pyridinium fluorochromate, potassium permanganate, molybdo (VI) phosphoric acid hydrates, quinolinium dichromate, silver (II) pyridine-2-carboxylate, tetrapropylammonium perruthenate, tetrabutylammonium perrhenate, diammonium cerium (IV) nitrate, triphenylbismuth dichloride, tris(2-methoxyphenyl) bismuth dichloride, tris(2-methylphenyl) bismuth dichloride, tris(4-trifluoromethylphenyl) bismuth dichloride or the like. Among these, potassium permanganate is preferable because it is less expensive and readily available. The surface treatment with the oxidizing agent can be followed by separation of an excess oxidizing agent and washing with water.

In the present invention, following the surface treatment, a residue of the oxidizing agent is removed. The removal of the residue of the oxidizing agent is performed by washing with an acid or a base. The acid or the base is preferably capable of dissolving a poorly water-soluble residue of the oxidizing agent. Examples of the acid include inorganic acids such as hydrochloric acid, nitric acid, sulfuric acid or the like. Examples of the base include an aqueous solution of caustic soda, an aqueous ammonia solution or the like. Among these, hydrochloric acid is preferable. By washing with the acid or the base, a poorly water-soluble compound that is possibly left as a residue of the oxidizing agent, such as manganese dioxide, is removed. Following the washing with the acid or the base, rinsing with water may also be performed.

Then, the carbon particle (B) from which the residue of the oxidizing agent has been removed is modified with a silane coupling agent. The silane coupling agent is an organic silicon compound that comprises, within a molecule thereof, both a functional group to contribute to a chemical bond and a hydrolyzable group to contribute to bonding to the surface of the carbon particle (B). As the silane coupling agent, commercially available agents containing various functional groups can be used. Examples include silane coupling agents containing an amino group, such as N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethyl-butylidene) propylamine, N-phenyl-3-aminopropyltrimethoxysilane, N-(vinylbenzyl)-2-aminoethyl-3-aminopropyltrimethoxy silane hydrochloride or the like; silane coupling agents containing a ureido group, such as 3-ureidopropyltriethoxysilane or the like; silane coupling agents containing a mercapto group, such as 3-mercaptopropylmethyldimethoxysilane, 3-mercaptopropyltrimethoxysilane or the like; silane coupling agents containing a sulfide group, such as bis(triethoxysilylpropyl) tetrasulfide or the like; silane coupling agents containing an isocyanate group, such as 3-isocyanatopropyltriethoxysilane or the like; silane coupling agents containing a vinyl group, such as vinyltrimethoxysilane, vinyltriethoxysilane or the like; silane coupling agents containing an epoxy group, such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane or the like; silane coupling agents containing a styryl group, such as p-styryltrimethoxysilane or the like; silane coupling agents containing a methacrylic group, such as 3-methacryloxypropylmethyldimethoxysilane, 3-methacryloxypropyltrimethoxysilane, 3-methacryloxypropylmethyldiethoxysilane, 3-methacryloxypropyltriethoxysilane or the like; silane coupling agents containing an acrylic group, such as 3-acryloxypropyltrimethoxysilane or the like; silane coupling agents containing a hydroxy group, such as hydroxypropyltrimethoxysilane, hydroxypropyltriethoxysilane or the like; and silane coupling agents containing a carboxy group, such as carboxymethoxyethyltrimethoxysilane or the like.

Modification with such a silane coupling agent can achieve introduction of a functional group that can serve as a base of a chemical bond onto the surface of the carbon particle (B). The functional group to be introduced is not particularly limited provided that it chemically bonds with a functional group introduced to the particle (A) and is preferably an isocyanate group that is highly reactive. The amount of the functional group to be introduced is not particularly limited and is preferably 1 to 20 parts by mass and more preferably 5 to 15 parts by mass in terms of the amount of the silane coupling agent to be used, relative to 100 parts by mass of the carbon particle (B).

When the particle (A) itself already contains sufficient number of functional groups that can serve as the base of a chemical bond, the particle (A) can be used as it is, while when the particle (A) itself does not contain sufficient number of the functional groups, introduction of such a functional group into the particle (A) is preferably performed.

In order to introduce a functional group, the particle (A) is preferably modified with a silane coupling agent. The silane coupling agent can be selected from those exemplified above. Modification with such a silane coupling agent can achieve introduction of a functional group that can serve as the base of a chemical bond onto the surface of the particle (A). The silane coupling agent to be used for modification of the particle (A) is preferably one that can react with a functional group introduced to the carbon particle (B) to achieve introduction of a functional group capable of forming the chemical bond described above. The functional group to be introduced is not particularly limited provided that it chemically bonds with a functional group introduced to the carbon particle (B). Examples thereof include a hydroxy group, an amino group, a carbonyl group, a silanol group or the like. Among these, an amino group is preferable for its high reactivity. The amount of the functional group to be introduced is not particularly limited and is preferably 1 to 60 parts by mass, more preferably 5 to 50 parts by mass, and further preferably 10 to 40 parts by mass in terms of the amount of the silane coupling agent used, relative to 100 parts by mass of the particle (A) .

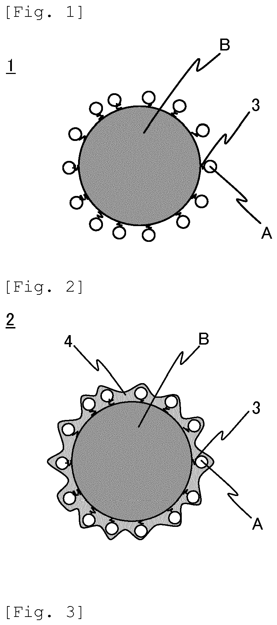

Then, the carbon particle (B) containing a functional group that can serve as the base of a chemical bond and the particle (A) containing a functional group that can serve as the base of the chemical bond are subjected to a reaction to form the chemical bond. This reaction can be conducted by stirring the carbon particle (B) containing the functional group and the particle (A) containing the functional group in a solvent. As the solvent, a solvent poorly soluble in water, such as butyl acetate, toluene or the like, or an aprotic polar solvent that is miscible with water and most organic solvents at any arbitrary rate, such as DMC, NMP or the like, is preferably used, for example. After the completion of the reaction, by filtrating the solvent off or distilling the solvent off with a rotary evaporator or the like, drying, and then pulverizing the resulting powder in a mortar, a composite particle 1 comprising the particle (A) and the carbon particle (B) linked to the particle (A) via a chemical bond 3, as shown in Fig. 1, can be obtained. The amount of the particle (A) is preferably 1 to 100 parts by mass, more preferably 3 to 50 parts by mass, and further preferably 5 to 30 parts by mass relative to 100 parts by mass of the carbon particle (B).

The composite particle resulting from the pulverization has a 50% particle diameter (D₅₀) based on a volumetric cumulative particle size distribution of preferably 2 to 40 µm, more preferably 2 to 30 µm, and further preferably 3 to 20 µm. The resulting composite particle can be used as a negative electrode material for use in a lithium-ion battery.

The negative electrode material according to the present invention has its particle (A) linked all over to the carbon particle (B) and therefore contains few agglomerates composed exclusively of the particle (A). This state can be confirmed by SEM-EDX observation. In other words, as observed by SEM-EDX, the negative electrode material of the present invention has a very small proportion of particle (A), in the entire population of the particle (A), that is observed where there is no carbon particle (B) observed.

### [Carbon coating]

In the present invention, the composite particle comprising the particle (A) and the carbon particle (B) linked to the particle (A) via a chemical bond can be covered with a carbon layer.

The carbon layer can be produced by a known method. Examples of the method include a method comprising making an organic substance attach to the composite particle and then carbonizing the organic substance.

Examples of the method for adhesion of the organic substance include a method comprising stirring the composite particle while an organic substance such as pitch, resins or the like is sprayed thereto; a method comprising using an apparatus such as a hybridizer manufactured by Nara Machinery Co., Ltd. or the like to mix the composite particle and an organic substance such as pitch, resins or the like and carry out mechanochemical treatment; a method comprising immersing the composite particle in a solution containing an organic substance such as saccharides or the like dissolved therein and then drying; a method comprising immersing the composite particle in a heated and melted organic substance such as saccharides or the like and then allowing the temperature to return to normal temperature; and a method comprising depositing an organic substance such as aromatic hydrocarbons or the like on the composite particle by CVD (Chemical Vapor Deposition). Among these, the method comprising immersing the composite particle in a solution containing an organic substance such as saccharides or the like dissolved therein and then drying is preferable.

The organic substance serving as a precursor of the carbon layer is not particularly limited. Examples thereof include pitch, resins, resin precursors such as monomers, saccharides, and aromatic hydrocarbons. As the pitch or the resins, at least one selected from the group consisting of petroleum pitch, coal pitch, phenolic resins, polyvinyl alcohol resins, furan resins, cellulose resins, polystyrene resins, polyimide resins, and epoxy resins is preferable. As the saccharides, any of monosaccharides, disaccharides, and polysaccharides can be used. Among the saccharides, at least one selected from the group consisting of glucose, fructose, galactose, sucrose, maltose, lactose, starch, cellulose, and glycogen is preferable. Examples of the aromatic hydrocarbons include benzene, toluene, xylene, ethylbenzene, styrene, cumene, naphthalene, anthracene or the like. Among these, saccharides are preferable. As the saccharides, at least one selected from the group consisting of glucose, fructose, galactose, sucrose, maltose, lactose, starch, cellulose, and glycogen is preferable.

The organic substance is preferably dissolved in an appropriate solvent. Examples of the solvent include nonpolar solvents such as hexane, benzene, toluene, diethyl ether, chloroform, ethyl acetate, methylene chloride or the like; polar aprotic solvents such as tetrahydrofuran, acetone, acetonitrile, N,N-dimethylformamide, dimethyl sulfoxide, quinoline or the like; and polar protic solvents such as 1-butanol, 2-propanol, 1-propanol, ethanol, methanol, formic acid, acetic acid, water or the like. Among these, polar solvents are preferable.

The amount of the organic substance to be used can be selected so as to control the amount of the carbon layer. The amount of the organic substance is preferably 0.05 to 50 parts by mass, more preferably 0.1 to 30 parts by mass, and further preferably 1 to 25 parts by mass relative to 100 parts by mass of the sum of the particle (A) and the carbon particle (B). The amount of the organic substance is approximately equal to the amount of the carbon layer.

Then, the composite particle to which the organic substance is attached is subjected to heat treatment at preferably not lower than 200 °C and not higher than 2000 °C and more preferably not lower than 500 °C and not higher than 1500 °C. By this heat treatment, a carbon-coated composite particle can be obtained. When the temperature during the heat treatment is too low, carbonization of the organic substance does not thoroughly complete and the resulting composite particle has residual hydrogen and/or residual oxygen that can adversely affect the battery properties. On the other hand, when the temperature during the heat treatment is too high, crystallization may proceed excessively to degrade the charge characteristics or to render the resultant inert to an Li ion and incapable of contributing to charge and discharge. The heat treatment is preferably performed in a non-oxidizing atmosphere. Examples of the non-oxidizing atmosphere include an atmosphere filled with an inert gas such as argon gas, nitrogen gas or the like. The heat treatment sometimes causes the carbon-coated composite particles to fuse with each other into a lump, and therefore pulverization and/or classification is carried out to regulate the 50% particle diameter (D₅₀) based on the volumetric cumulative particle size distribution to fall within the range of preferably 2 to 40 µm, more preferably 2 to 15 µm, further preferably 3 to 10 µm, and most preferably 4 to 8 µm for using the resulting carbon-coated composite particle as a negative electrode material.

Thus, a negative electrode material for use in a lithium-ion battery 2 comprising a composite particle in which the particle (A) comprising an element capable of occluding and releasing a lithium ion is linked to the carbon particle (B) via a chemical bond 3, and a carbon layer 4 that covers the composite particle, as shown in Fig. 2, can be obtained. The negative electrode material 2 according to the present invention, as observed by SEM-EDX, has a very small proportion of particle (A), in the entire population of the particle (A), that is observed where there is no carbon particle (B) observed.

### (Negative electrode sheet)

The negative electrode sheet according to an embodiment of the present invention comprises a current collector and an electrode layer that covers the current collector.

Examples of the current collector include nickel foil, copper foil, a nickel mesh, a copper mesh or the like.

The electrode layer comprises a binder, a conductive assistant, and the negative electrode material.

Examples of the binder include polyethylene, polypropylene, ethylene-propylene terpolymers, butadiene rubber, styrene-butadiene rubber, butyl rubber, acrylic rubber, macromolecular compounds with high ionic conductivity or the like. Examples of the macromolecular compounds with high ionic conductivity include polyvinylidene fluoride, polyethylene oxide, polyepichlorohydrin, polyphosphazenes, polyacrylonitrile or the like. The amount of the binder is preferably 0.5 to 100 parts by mass relative to 100 parts by mass of the negative electrode material.

The conductive assistant is not particularly limited provided that it plays a role in imparting conductivity and stable electrode performance (buffering of a volumetric change caused by intercalation and deintercalation of lithium ions) to an electrode. Examples thereof include vapor grown carbon fiber ("VGCF" manufactured by Showa Denko K.K., for example), conductive carbon ("DENKA BLACK" manufactured by DENKI KAGAKU KOGYO KABUSHIKI KAISHA, "Super C65" manufactured by TIMCAL, "Super C45" manufactured by TIMCAL, and "KS6L" manufactured by TIMCAL, for example) or the like. The amount of the conductive assistant is preferably 10 to 100 parts by mass relative to 100 parts by mass of the negative electrode material.

The electrode layer can be obtained, for example, by applying a paste comprising the binder, the negative electrode material and the conductive assistant and then drying. The paste is obtained, for example, by at least kneading the negative electrode material, the binder, the conductive assistant, and, when necessary, a solvent together. The paste can be shaped into a sheet, a pellet, or the like.

The solvent is not particularly limited and examples thereof include N-methyl-2-pyrrolidone, dimethylformamide, isopropanol, water or the like. When the binder contains water as a solvent, a thickener is preferably used in combination. The amount of the solvent is adjusted so that the paste has viscosity that allows easy application thereof to the current collector.

The method of applying the paste is not particularly limited. The thickness of the electrode layer is usually 50 to 200 µm. When the electrode layer is too thick, the negative electrode sheet may not be able to be accommodated in a standardized battery casing. The thickness of the electrode layer can be controlled by selecting the amount of paste to be applied or by subjecting the paste to pressure forming after drying. Examples of the method of pressure forming include roll pressing and plate pressing. The pressure at the time of pressure forming is preferably about 100 MPa to about 300 MPa (about 1 to 3 ton/cm²).

### (Lithium-ion battery)

The lithium-ion battery according to an embodiment of the present invention comprises at least one selected from the group consisting of a nonaqueous electrolytic solution and a nonaqueous polymer electrolyte; a positive electrode sheet; and the negative electrode sheet.

As the positive electrode sheet for use in the present invention, a sheet conventionally used in a lithium-ion battery, specifically a sheet comprising a positive electrode active material can be used. Examples of the positive electrode active material include LiNiO₂, LiCoO₂, LiMn₂O₄, LiNi_{0.34}Mn_{0.33}CO_{0.33}O₂, LiFePO₄ or the like.

The nonaqueous electrolytic solution and the nonaqueous polymer electrolyte for use in the lithium-ion battery are not particularly limited. Examples thereof include an organic electrolytic solution obtained by dissolving a lithium salt such as LiClO₄, LiPF₆, LiAsF₆, LiBF₄, LiSO₃CF₃, CH₃SO₃Li, CF₃SO₃Li or the like in a nonaqueous solvent such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, γ-butyrolactone or the like; a gel polymer electrolyte comprising polyethylene oxide, polyacrylonitrile, polyvinylidene fluoride, polymethyl methacrylate or the like; and a solid polymer electrolyte comprising a polymer having an ethylene oxide bond or the like.

To the electrolytic solution, a small amount of a substance that undergoes a decomposition reaction during the first charging of the lithium-ion battery may be added. Examples of the substance include vinylene carbonate (VC), biphenyl, propane sultone (PS), fluoroethylene carbonate (FEC), ethylene sultone (ES) or the like. The amount thereof is preferably 0.01 to 30% by mass.

The lithium-ion battery of the present invention can comprise a separator between the positive electrode sheet and the negative electrode sheet. Examples of the separator include a nonwoven fabric, cloth, a microporous film, or a combination of these, composed mainly of polyolefin such as polyethylene, polypropylene or the like in major proportions.

### EXAMPLES

The present invention will be explained more specifically by way of examples.

Various physical properties in the examples were measured by the following methods.

### (Particle diameter)

To 50 ml of water, two micro-spatulas of a powder and two drops of a nonionic surfactant (Triton-X; manufactured by Roche Applied Science) were added, followed by ultrasonic dispersion for 3 minutes. The resulting dispersion liquid was loaded into a laser diffraction particle size distribution analyzer (LMS-2000e) manufactured by Seishin Enterprise Co., Ltd. for measurement of the volumetric cumulative particle size distribution.

### (Raman R value)

Measurement was performed using a Laser Raman Spectrophotometer (NRS-3100) manufactured by JASCO Corporation under the following conditions: an excitation wavelength of 532 nm, an entrance slit width of 200 µm, an exposure time of 15 seconds, two times of integration and a diffraction grating having 600 lines/mm. From the spectrum obtained by the measurement, the ratio (I_{D}/I_{G}) of the intensity, I_{D}, of the peak in the vicinity of 1360 cm⁻¹ (attributed to amorphous components) to the intensity, I_{G}, of the peak in the vicinity of 1580 cm⁻¹ (attributed to graphite components) was determined by calculation and was used as the R value to serve as an index of graphitization.

### (d₀₀₂, L_{C})

From the 002 diffraction line in the powder X-ray diffraction, the interplanar spacing, d₀₀₂, and the size of crystallite in the c axis direction, L_{C}, were determined.

### (SEM (scanning electron microscope) observation)

Using QUICK AUTO COATER manufactured by JEOL Ltd. with PRESET set at 20, the surface of a sample was sputtered with platinum. Then, using FE-SEM (JSM-7600F) manufactured by JEOL Ltd. with the column mode set at SEI (accelerating voltage of 5.0 kV), SEM observation of the powder surface was performed.

Measurement on SEM-EDX was performed at a resolution to allow clear observation of distribution with the column mode set at SEI (accelerating voltage of 15.0 kV), for elemental mapping.

### (Preparation of negative electrode sheet)

As binders, polyacrylic acid (PAA, molecular weight: about 1800) and carboxymethylcellulose (CMC) were prepared. The PAA as a white powder was dissolved in purified water to obtain a PAA solution. The CMC as a white powder was mixed with purified water, and the resulting mixture was stirred with a stirrer all night and all day to obtain an aqueous solution of CMC that absorbed and became swollen with the purified water.

As a conductive assistant, a mixture of carbon black (SUPER C45; manufactured by TIMCAL) and vapor grown carbon fiber (VGCF-H, manufactured by Showa Denko K.K.) at a mass ratio of 3:2 was used.

To a mixture of 90 parts by mass of a negative electrode material, 5 parts by mass of the conductive assistant, 2.5 parts by mass of the aqueous CMC solution, and 2.5 parts by mass of the PAA solution, an appropriate amount of water was added for viscosity adjustment, followed by kneading in a planetary centrifugal mixer (manufactured by Thinky Corporation) to obtain a negative electrode paste.

The negative electrode paste was applied to copper foil so that the resulting negative electrode layer had a thickness of 150 µm, followed by vacuum drying. The resulting sheet was stamped into a piece of sheet being 16 mm in diameter. The piece of sheet was subjected to vacuum drying at 50 °C for 12 hours to obtain a negative electrode sheet.

### (Production of battery for evaluation purpose)

The following processes were conducted inside a glove box maintained in a dry argon gas atmosphere at a dew point of -80 °C or lower.

A 2032-type coin cell (23 mm in diameter, 20 mm in thickness) was prepared. 1-mm thick lithium foil was stamped into a piece of foil being 17.5 mm in diameter, which was to be used as a positive electrode sheet. The positive electrode sheet was placed in a coin cell cap. Then, an electrolytic solution was injected into the coin cell. Subsequently, a separator and a negative electrode sheet were placed thereon in this order, and the coin cell casing and the coin cell cap were hermetically crimped together to obtain a lithium-ion battery for evaluation purposes.

The electrolytic solution used was a liquid prepared by adding 1% by mass of fluoroethylene carbonate (FEC) to a mixed solvent of ethylene carbonate, ethyl methyl carbonate and diethyl carbonate at a volume ratio of 3:5:2 and then, in the resultant, dissolving electrolyte LiPF₆ at a concentration of 1 mol/L.

### (Charge-discharge test)

A lithium-ion battery for evaluation purposes was charged from resting potential to 25 mV at a constant current at 0.373 mA/cm². This was followed by discharging at a constant current at 0.373 mA/cm² to the cut-off voltage of 1.5 V. This charge and discharge process was defined as one cycle and was repeated 20 times.

### Example 1

### (Preparation of particle (A))

A Si particle (primary particle diameter: 100 nm) was prepared. In a recovery flask, 100 mL of toluene, and 0.2 g of 3-aminopropyltriethoxysilane (manufactured by Shin-Etsu Chemical Co., Ltd., LS-3150) as a silane coupling agent were charged, followed by ultrasonic stirring. To the resultant, 2 g of the Si particle was added, followed by ultrasonic irradiation for 10 minutes. Subsequently, the recovery flask was set in a reflux condenser for reflux at 135 °C for 1 hour to introduce an amino group onto the surface of the Si. The surface-treated Si particle was to be used as a particle (A-1).

### (Preparation of carbon particle (B))

Petroleum coke was pulverized so as to have an average particle diameter of 5 µm. The resultant was subjected to heat treatment in an Acheson furnace at 3000 °C to obtain a graphite particle having a BET specific surface area of 3.2 m²/g, d₀₀₂ of 0.3363 nm, L_{C} of 61 nm, a 10% particle diameter (D10) of 2.5 µm, a 50% particle diameter (D50) of 5.1 µm, a 90% particle diameter (D90) of 12.3 µm, and I_{D}/I_{G} (R value) of 0.06.

The graphite particle was subjected to surface treatment, as follows. First, the graphite particle was subjected to heat treatment in an air stream at 600 °C. The resultant was added to a 4.7% by mass sulfuric acid acidic potassium permanganate solution, followed by stirring at normal temperature for 18 hours. This was followed by filtration through filter paper (manufactured by Kiriyama Works Co., No. 5C, retained particle diameter : 1 µm), and the residue on the filter paper was washed with water. By this surface treatment, a graphite particle rich in hydroxy groups on the surface was obtained.

Subsequently, the residue on the filter paper was washed with 6N hydrochloric acid, and lastly the residue on the filter paper was washed with water. By this acid wash, a poorly water-soluble residue of the oxidizing agent, such as manganese oxide or the like, was removed.

In a recovery flask, 200 mL of toluene, and 1.8 g of 3-(triethoxysilyl)propyl isocyanate (manufactured by Wako Pure Chemical Industries, Ltd.) as a silane coupling agent were charged, followed by ultrasonic stirring. To the resultant, 18 g of the graphite particle from which the residue of the oxidizing agent had been removed was added, followed by ultrasonic irradiation for 15 minutes. Subsequently, the recovery flask was set in a reflux condenser for reflux at 80 °C for 8 hours to introduce an isocyanate group onto the surface of the graphite particle. The surface-treated graphite particle was to be used as a carbon particle (B-1) .

### (Preparation of negative electrode material)

To 18 g of the carbon particle (B-1), 2 g of the particle (A-1) was added, and then toluene was further added to achieve a total weight of the solid matter and toluene of 200 g. The resulting mixture was subjected to ultrasonic irradiation for 30 minutes. Subsequently, the recovery flask was set in a reflux condenser for reflux at 80 °C for 3 hours to form a urea bond between the isocyanate group on the surface of the carbon particle and the amino group on the surface of the particle to obtain a composite particle. Then, the toluene containing the composite particle immersed therein was filtrated through filter paper (manufactured by Millipore Corporation, pore size: 1 µm). The residue on the filter paper was dried, and then the resulting solid matter was pulverized in a mortar to obtain a negative electrode material. The resulting negative electrode material was used to produce a lithium-ion battery for evaluation purposes, followed by measurement of the charge-discharge characteristics. The results are shown in Table 1 and Fig. 3. According to SEM-EDX observation, a carbon particle was always accompanied by an Si particle and no Si particle was observed where there was no carbon particle observed. This proves that the negative electrode material comprises Si particles linked to the carbon particles all over.

### Example 2

A negative electrode material was obtained in the same manner as in Example 1 except that the concentration of the sulfuric acid acidic potassium permanganate solution was changed to 2.5% by mass. According to SEM-EDX observation, a carbon particle was always accompanied by an Si particle and no Si particle was observed where there was no carbon particle observed.

The resulting negative electrode material was used to produce a lithium-ion battery for evaluation purposes, followed by measurement of the charge-discharge characteristics. The results are shown in Table 1.

### Example 3

A negative electrode material was obtained in the same manner as in Example 1 except that the concentration of the sulfuric acid acidic potassium permanganate solution was changed to 1.1% by mass. According to SEM-EDX observation, a carbon particle was always accompanied by an Si particle and no Si particle was observed where there was no carbon particle observed.

The resulting negative electrode material was used to produce a lithium-ion battery for evaluation purposes, followed by measurement of the charge-discharge characteristics. The results are shown in Table 1.

### Comparative Example 1

A negative electrode material was obtained in the same manner as in Example 1 except that no washing with 6N hydrochloric acid was performed. According to SEM-EDX observation of the resulting negative electrode material, Si particles agglomerated together and many of the carbon particles had Si particles attached to only part of their surfaces. According to SEM-EDX observation, some Si particles were observed where there were no carbon particles observed and some carbon particles were observed where there were no Si particles observed. This proves that the negative electrode material has its Si particles agglomerated together with some of them isolated from the carbon particles.

The resulting negative electrode material was used to produce a lithium-ion battery for evaluation purposes, followed by measurement of the charge-discharge characteristics. The results are shown in Table 1 and Fig. 3.

As shown in Table 1, the negative electrode material obtained by the method of Comparative Example 1, as found by SEM observation, showed that part of the graphite particle was covered with a needle crystal. By elemental mapping by SEM-EDX, the needle crystal was found to be a poorly water-soluble Mn compound. The Mn content was 3 to 5% by mass.

According to SEM observation, the negative electrode material obtained by the method of any of Examples 1 to 3 had no needle crystal. According to elemental mapping by SEM-EDX, the Mn content was below the limits of detection. Presumably, a poorly water-soluble Mn compound had been removed through acid washing.

A lithium-ion battery comprising the negative electrode material obtained by the method of Example 1 had high initial discharge capacity, high initial efficiency, and a remarkably excellent cycle retention ratio. However, a lithium-ion battery comprising the negative electrode material obtained by the method of Comparative Example 1 had almost zero charge-discharge capacity left after 20 cycles, indicating that it had lost its functions as a negative electrode material for use in a battery.

As proven by the results from Examples 1 to 3, the initial discharge capacity and the initial efficiency tends to increase when the amount of oxidizing agent is large and the capacity retention ratio tends to be excellent when the amount of oxidizing agent is small.

### [Table 1]

**Table 1**

| | HCl wash | KMnO₄ Conc. | Presence of needle crystal observed by SEM | Initial discharge capacity mAh/g | Initial efficiency | 20-Cycle capacity retention ratio |
|---|---|---|---|---|---|---|
| Ex.1 | Yes | 4.7% | No | 505 | 88% | 55% |
| Comp.Ex.1 | No | 5.0% | Yes | 481 | 79% | 7% |
| Ex.2 | Yes | 2.5% | No | 436 | 87% | 61% |
| Ex.3 | Yes | 1.0% | No | 400 | 85% | 70% |

### Example 4

Sucrose (C₁₂H₂₂O₁₁) was dissolved in purified water to prepare an aqueous sucrose solution.

To 12 g of the negative electrode material obtained by the method of Example 1, an appropriate amount of isopropyl alcohol was added, followed by mixing. To the resulting mixture, the aqueous sucrose solution was added so that the proportion of sucrose in the negative electrode material was 10% by mass, followed by further mixing. Because the Si particles were chemically bonded with the carbon particles, no unaccompanied floating Si particles were observed.

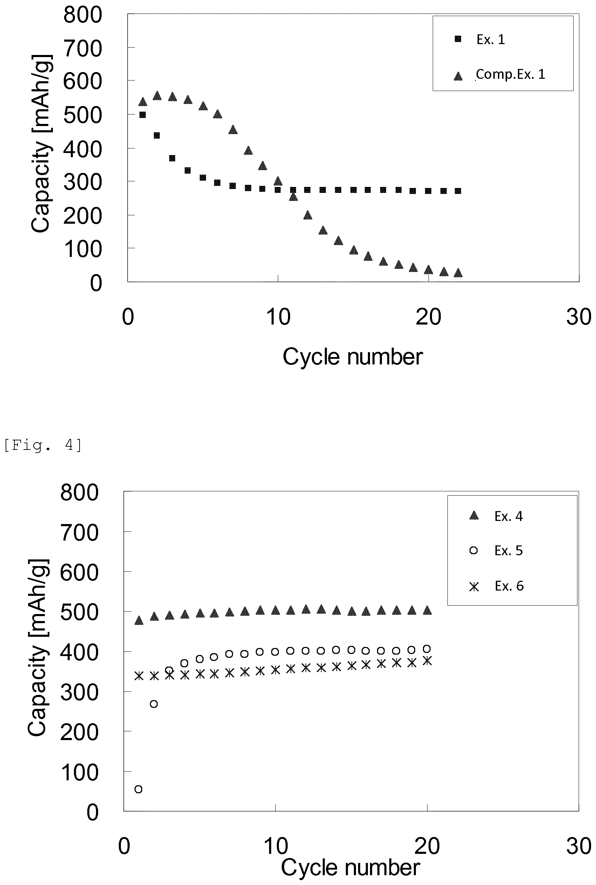

The resulting liquid mixture was spread in a stainless steel tray and was dried at normal temperature, followed by vacuum drying at 70 °C to remove water. The resultant was then placed in a calcination furnace and calcination in a nitrogen gas stream was performed at 700 °C for 1 hour. After being taken out of the calcination furnace, the resultant was pulverized and sieved to obtain a carbon-coated negative electrode material. The resulting negative electrode material was used to produce a lithium-ion battery for evaluation purposes, followed by measurement of the charge-discharge characteristics. The results are shown in Table 2 and Fig. 4.

### Example 5

A carbon-coated negative electrode material was obtained in the same manner as in Example 4 except that the amount of sucrose in the negative electrode material was changed to 20% by mass. The resulting negative electrode material was used to produce a lithium-ion battery for evaluation purposes, followed by measurement of the charge-discharge characteristics. The results are shown in Table 2 and Fig. 4.

### Example 6

A carbon-coated negative electrode material was obtained in the same manner as in Example 4 except that the amount of sucrose in the negative electrode material was changed to 30% by mass. The resulting negative electrode material was used to produce a lithium-ion battery for evaluation purposes, followed by measurement of the charge-discharge characteristics. The results are shown in Table 2 and Fig. 4.

### [Table 2]

**Table 2**

| | C-Coating amount | Initial discharge capacity mAh/g | Initial efficiency | 20-Cycle capacity retention ratio |
|---|---|---|---|---|
| Ex.1 | 0% | 505 | 88% | 55% |
| Ex.4 | 10% | 456 | 79% | >100% |
| Ex.5 | 20% | 357 | 66% | >100% |
| Ex.6 | 30% | 319 | 59% | >100% |

As shown in Table 2 and Fig. 4, it is proven that the capacity retention ratio was improved by carbon coating. Although capacity usually decreases after repeated charge and discharge processes as shown in Fig. 3, the capacity of a carbon-coated negative electrode material after 20 cycles shows almost no decrease from the capacity at the time of the first cycle. It should be noted that carbon coating results in a decrease in the mass proportion of Si particles in a negative electrode material and this causes a decrease in initial discharge capacity. Therefore, it is suggested that, by taking the amount of carbon coating into consideration and increasing the mass proportion of Si particles chemically bonded to carbon particles, a negative electrode material having excellent initial discharge and an excellent capacity retention ratio can be obtained.

A Si particle inherently tends to agglomerate by the van der Waals force, and a Si particle has low electrical conductivity. An agglomerate of Si particles is electrically insulated and therefore does not participate in charge and discharge in a lithium-ion battery, which results in decreased capacity, decreased cycle characteristics, and decreased rate characteristics.

In the present invention, Si particles are distributed uniformly across the surfaces of the carbon particles as base materials. It is also assumed that carbon coating improves conductivity among non-agglomerated Si particles and conductivity between a Si particle and a carbon particle, and also plays a role in relaxing the extent of expansion and contraction of a Si particle.

## Claims

1. A method for producing a negative electrode material for use in a lithium-ion battery, the method comprising:
subjecting a carbon particle (B) to surface treatment with an oxidizing agent and then removing a residue of the oxidizing agent,
modifying the carbon particle (B) from which the residue of the oxidizing agent has been removed with a silane coupling agent, and
linking the modified carbon particle (B) and a particle (A) comprising an element capable of occluding and releasing a lithium ion via a chemical bond, wherein the removal of the residue of the oxidizing agent comprises washing with an acid or a base.

2. The method for producing a negative electrode material for use in a lithium-ion battery according to claim 1, the method further comprising:
modifying the particle (A) with a silane coupling agent, wherein the particle (A) used in the linking is the modified particle (A).

3. The method for producing a negative electrode material for use in a lithium-ion battery according to claim 1 or 2, wherein the removal of the residue of the oxidizing agent comprises washing with an inorganic acid.

4. The method for producing a negative electrode material for use in a lithium-ion battery according to any one of claims 1 to 3, further comprising coating a composite particle with carbon, wherein the composite particle comprises the particle (A) and the carbon particle (B) linked to the particle (A) via a chemical bond.

5. The method for producing a negative electrode material for use in a lithium-ion battery according to claim 4, wherein the coating with carbon comprises attaching an organic substance to the composite particle, wherein the composite particle comprises the particle (A) and the carbon particle (B) linked to the particle (A) via a chemical bond, and then carbonizing the organic substance.

6. The method for producing a negative electrode material for use in a lithium-ion battery according to claim 5, wherein the organic substance is a saccharide.

7. The method for producing a negative electrode material for use in a lithium-ion battery according to any one of claims 1 to 6, wherein the carbon particle (B) comprises:
a graphite particle resulting from heat treatment of petroleum coke and/or coal coke at a temperature of 2000 °C or higher, and
a carbonaceous layer having a ratio of an intensity (I_{D}) of a peak in a range from 1300 to 1400 cm⁻¹ to an intensity (I_{G}) of a peak in a range from 1580 to 1620 cm⁻¹ as measured by Raman spectroscopy, I_{D}/I_{G} (R value), of 0.1 or higher, wherein the carbonaceous layer is on the surface of the graphite particle.

8. A negative electrode material for use in a lithium-ion battery, the negative electrode material comprising:
a composite particle comprising a particle (A) comprising an element capable of occluding and releasing a lithium ion and a carbon particle (B) linked to the particle (A) via a chemical bond, and
a carbon layer that covers the composite particle, and that is obtainable by attaching an organic substance to the composite particle and then carbonizing the organic substance, wherein the carbon particle (B) is obtained by surface treatment with an oxidizing agent and then washing with an acid or a base.

9. A negative electrode material for use in a lithium-ion battery, obtained by the method according to any one of claims 1 to 7.

10. A negative electrode sheet comprising:
a current collector, and
a layer that covers the current collector and comprises the negative electrode material for use in a lithium-ion battery according to claim 8 or 9, a binder, and a conductive assistant.

11. A lithium-ion battery comprising the negative electrode sheet according to claim 10.

12. A lithium-ion battery comprising the negative electrode material according to claim 8 or 9.

13. A lithium-ion battery comprising a negative electrode material obtained by the method according to any one of claims 1 to 7.

## Patentansprüche

1. Verfahren zum Herstellen eines Negativelektrodenmaterials für die Verwendung in einer Lithiumionenbatterie, welches umfasst:
die Oberflächenbehandlung eines Kohlenstoffteilchens (B) mit einem Oxidationsmittel und das anschließende Entfernen eines Restes des Oxidationsmittels,
das Modifizieren des Kohlenstoffteilchens (B), von dem der Rest des Oxidationsmittels entfernt worden ist, mit einem Silankopplungsmittel und
das Verbinden des modifizierten Kohlenstoffteilchens (B) und eines Teilchens (A), das ein Element enthält, welches ein Lithiumion einschließen und freisetzen kann, über eine chemische Bindung, wobei das Entfernen des Restes des Oxidationsmittels das Waschen mit einer Säure oder einer Base umfasst.

2. Verfahren zum Herstellen eines Negativelektrodenmaterials für die Verwendung in einer Lithiumionenbatterie nach Anspruch 1, welches außerdem umfasst:
das Modifizieren des Teilchens (A) mit einem Silankopplungsmittel, wobei das für die Verbindung eingesetzte Teilchen (A) das modifizierte Teilchen (A) ist.

3. Verfahren zum Herstellen eines Negativelektrodenmaterials für die Verwendung in einer Lithiumionenbatterie nach Anspruch 1 oder 2, wobei das Entfernen des Restes des Oxidationsmittels das Waschen mit einer anorganischen Säure umfasst.

4. Verfahren zum Herstellen eines Negativelektrodenmaterials für die Verwendung in einer Lithiumionenbatterie nach einem der Ansprüche 1 bis 3, welches außerdem das Beschichten eines Verbundteilchens mit Kohlenstoff umfasst, wobei das Verbundteilchen das Teilchen (A) und das über eine chemische Bindung mit dem Teilchen (A) verbundene Kohlenstoffteilchen (B) umfasst.

5. Verfahren zum Herstellen eines Negativelektrodenmaterials für die Verwendung in einer Lithiumionenbatterie nach Anspruch 4, wobei das Beschichten mit Kohlenstoff das Anheften einer organischen Substanz an das Verbundteilchen, wobei das Verbundteilchen das Teilchen (A) und das mit dem Teilchen (A) über eine chemische Verbindung verbundene Kohlenstoffteilchen (B) ist, und das anschließende Karbonisieren der organischen Substanz umfasst.

6. Verfahren zum Herstellen eines Negativelektrodenmaterials für die Verwendung in einer Lithiumionenbatterie nach Anspruch 5, wobei die organische Substanz ein Saccharid ist.

7. Verfahren zum Herstellen eines Negativelektrodenmaterials für die Verwendung in einer Lithiumionenbatterie nach einem der Ansprüche 1 bis 6, wobei das Kohlenstoffteilchen (B) umfasst:
ein durch Hitzebehandlung von Petroleumkoks und/oder Kohlenkoks bei einer Temperatur von 2000°C oder höher erhaltenes Graphitteilchen und
eine kohlenstoffhaltige Schicht mit einem durch Raman-Spektroskopie gemessenes Verhältnis der Intensität (I_{D}) eines Peaks in einem Bereich von 1300 bis 1400 cm⁻¹ zu einer Intensität (I_{G}) eines Peaks in einem Bereich von 1580 bis 1620 cm⁻¹, I_{D}/I_{G} (R-Wert), von 0,1 oder höher, wobei die kohlenstoffhaltige Schicht auf der Oberfläche des Graphitteilchens angeordnet ist.

8. Negativelektrodenmaterial für die Verwendung in einer Lithiumionenbatterie, welches umfasst:
ein Verbundteilchen, welches das Teilchen (A), das ein Element enthält, das ein Lithiumion einschließen und freisetzen kann, und ein über eine chemische Bindung mit dem Teilchen (A) verbundenes Kohlenstoffteilchen (B) enthält, und eine das Verbundteilchen bedeckende Kohlenstoffschicht umfasst, und
welches erhältlich ist durch Anheften einer organischen Substanz an das Verbundteilchen und das anschließende Karbonisieren der organischen Substanz, wobei das Kohlenstoffteichen (B) durch Oberflächenbehandlung mit einem Oxidationsmittel und anschließendem Waschen mit einer Säure oder einer Base erhalten wird.

9. Negativelektrodenmaterial für die Verwendung in einer Lithiumionenbatterie, erhalten durch das Verfahren nach einem der Ansprüche 1 bis 7.

10. Negativelektrodenfolie, welche umfasst:
einen Stromkollektor und eine Schicht, die den Stromkollektor bedeckt und das Negativelektrodenmaterial für die Verwendung in einer Lithiumionenbatterie nach Anspruch 8 oder 9, ein Bindemittel und ein Leiterhilfsmittel umfasst.

11. Lithiumionenbatterie, welche die Negativelektrodenfolie nach Anspruch 10 umfasst.

12. Lithiumionenbatterie, welche das Negativelektrodenmaterial nach Anspruch 8 oder 9 umfasst.

13. Lithiumionenbatterie, die das durch das Verfahren nach einem der Ansprüche 1 bis 7 erhaltene Negativelektrodenmaterial umfasst.

## Revendications

1. Procédé de production d'un matériau d'électrode négative à utiliser dans une batterie au lithium-ion, le procédé comprenant les étapes suivantes:
soumettre une particule de carbone (B) à un traitement de surface avec un agent oxydant et éliminer ensuite un résidu de l'agent oxydant,
modifier la particule de carbone (B) de laquelle le résidu de l'agent oxydant a été éliminé avec un agent de couplage silane, et
lier la particule de carbone modifiée (B) et une particule (A) comprenant un élément capable de bloquer et de libérer un ion lithium par l'intermédiaire d'une liaison chimique, dans lequel l'élimination du résidu de l'agent oxydant comprend un lavage avec un acide ou une base.

2. Procédé de production d'un matériau d'électrode négative à utiliser dans une batterie au lithium-ion selon la revendication 1, le procédé comprenant en outre la modification de la particule (A) avec un agent de couplage silane, dans lequel la particule (A) utilisée dans la liaison est la particule modifiée (A).

3. Procédé de production d'un matériau d'électrode négative à utiliser dans une batterie au lithium-ion selon la revendication 1 ou 2, dans lequel l'élimination du résidu de l'agent oxydant comprend un lavage avec un acide inorganique.

4. Procédé de production d'un matériau d'électrode négative à utiliser dans une batterie au lithium-ion selon l'une quelconque des revendications 1 à 3, comprenant en outre le revêtement d'une particule composite avec du carbone, dans lequel la particule composite comprend la particule (A) et la particule de carbone (B) liée à la particule (A) par l'intermédiaire d'une liaison chimique.

5. Procédé de production d'un matériau d'électrode négative à utiliser dans une batterie au lithium-ion selon la revendication 4, dans lequel le revêtement avec du carbone comprend la fixation d'une substance organique à la particule composite, dans lequel la particule composite comprend la particule (A) et la particule de carbone (B) liée à la particule (A) par l'intermédiaire d'une liaison chimique, et ensuite la carbonisation de la substance organique.

6. Procédé de production d'un matériau d'électrode négative à utiliser dans une batterie au lithium-ion selon la revendication 5, dans lequel la substance organique est un saccharide.

7. Procédé de production d'un matériau d'électrode négative à utiliser dans une batterie au lithium-ion selon l'une quelconque des revendications 1 à 6, dans lequel la particule de carbone (B) comprend:
une particule de graphite obtenue à partir d'un traitement thermique de coke de pétrole et/ou de coke de houille à une température de 2000 °C, ou plus, et
une couche carbonée présentant un rapport entre une intensité (I_{D}) d'un pic dans une gamme de 1300 cm⁻¹ à 1400 cm⁻¹ et une intensité (I_{G}) d'un pic dans une gamme de 1580 cm⁻¹ à 1620 cm⁻¹, mesuré par spectroscopie Raman, I_{D/}I_{G} (valeur R), de 0,1 ou plus, dans lequel la couche carbonée est située sur la surface de la particule de graphite.

8. Matériau d'électrode négative à utiliser dans une batterie au lithium-ion, le matériau d'électrode négative comprenant:
une particule composite comprenant une particule (A) comprenant un élément capable de bloquer et de libérer un ion lithium, et une particule de carbone (B) liée à la particule (A) par l'intermédiaire d'une liaison chimique, et une couche de carbone qui couvre la particule composite, et qui peut être obtenue en attachant une substance organique à la particule composite et en carbonisant ensuite la substance organique, dans lequel la particule de carbone (B) est obtenue par un traitement de surface avec un agent oxydant suivi d'un lavage avec un acide ou une base.

9. Matériau d'électrode négative à utiliser dans une batterie au lithium-ion, obtenu par le procédé selon l'une quelconque des revendications 1 à 7.

10. Feuille d'électrode négative, comprenant:
un collecteur de courant, et
une couche qui couvre le collecteur de courant et qui comprend le matériau d'électrode négative à utiliser dans une batterie au lithium-ion selon la revendication 8 ou 9, un liant et un assistant de conduction.

11. Batterie au lithium-ion comprenant la feuille d'électrode négative selon la revendication 10.

12. Batterie au lithium-ion comprenant le matériau d'électrode négative selon la revendication 8 ou 9.

13. Batterie au lithium-ion comprenant un matériau d'électrode négative obtenu par le procédé selon l'une quelconque des revendications 1 à 7.
